# FASCICULE DE BREVET EUROPEEN

(11) **EP 4 622 514 B1**
(45) Date de publication et mention de la délivrance du brevet: **18.11.2026**
(21) Numéro de dépôt: 23813012.4
(22) Date de dépôt: 30.10.2023
(51) Int. Cl.: A47J 31/36

(54) **GROUPE D'EXTRACTION À INTRODUCTION ET ÉJECTION AUTOMATIQUES POUR LA PRÉPARATION D'UNE BOISSON AROMATISÉE**
EXTRAKTIONSEINHEIT MIT AUTOMATISCHER EINFÜHRUNG UND AUSGABE ZUR HERSTELLUNG EINES AROMATISIERTEN GETRÄNKS
EXTRACTION UNIT HAVING AUTOMATIC INTRODUCTION AND EJECTION, FOR THE PREPARATION OF A FLAVOURED BEVERAGE

(30) Priorité: 23.11.2022 FR 2212197
(43) Date de publication de la demande: 01.10.2025
(73) Titulaire: Technopool Sarl, 06340 La Trinite (FR)
(72) Inventeur: FERRIER, Frédéric, 06340 LA TRINITÉ (FR); FERRIER, Christian, 06340 LA TRINITÉ (FR)
(74) Mandataire: Cabinet Beau de Loménie
(86) Numéro de dépôt international: PCT/FR2023/051713
(87) Numéro de publication internationale: WO 2024/110712

(56) Documents cités:
- EP-B2- 1 046 366
- US-A- 4 724 752
- US-A1- 2004 231 521
- US-A1- 2018 110 358
- US-B2- 9 226 612

## Description

### Domaine Technique

La présente invention se rapporte au domaine général de la préparation d'une boisson aromatisée, notamment du café, du thé, du chocolat chaud ou froid, du lait, de la soupe, etc., à partir d'une poudre contenue dans une capsule rigide ou semi-rigide.

Elle concerne plus précisément un groupe d'extraction à introduction et éjection automatiques pour la mise œuvre d'une telle préparation qui soit adapté à une utilisation industrielle.

### Technique antérieure

Les capsules contenant une poudre pour la préparation d'une boisson aromatisée, notamment du café, sont bien connues et largement répandus.

L'invention s'applique plus précisément aux capsules du type présentant une paroi latérale de révolution rigide ou semi-rigide qui est fermée, d'une part à sa base par une paroi de fond munie d'un orifice pour l'écoulement de la boisson aromatisée et, d'autre part, à son extrémité opposée par une membrane supérieure (ou opercule) flexible destinée à être perforée pour l'injection de liquide. On pourra se référer aux publications EP 1,472,156 et EP 2,888,182 qui décrivent des exemples de structure d'une telle capsule.

Par rapport aux capsules à café de l'art antérieur, ce type de capsule présente l'avantage de pouvoir accueillir une plus grande contenance de poudre (typiquement 8g au lieu de 4g), ce qui permet de réaliser une multitude de boissons aromatisées autres que du café (comme du thé, du chocolat chaud ou froid, du lait, de la soupe, etc.).

Généralement, les machines de préparation de boissons aromatisées qui utilisent ce type de capsule présentent le fonctionnement suivant. La capsule est positionnée à la main à plat dans un tiroir avec sa paroi de fond dirigée vers le bas. La capsule est ainsi traversée par un flux d'eau sous pression qui est vertical de haut en bas (contrairement aux capsules à café de l'art antérieur pour lesquelles le flux d'eau sous pression est horizontal). La boisson sort alors directement de la capsule sans aucun contact direct avec une partie interne ou externe de la machine. Il en résulte un nettoyage de la machine qui est assez simple puisque seul le tiroir qui réceptionne la capsule doit être régulièrement rincé. Un groupe d'extraction de l'état de l'art comprenant un châssis fixe, une goulotte, une tête d'entrée, un support de tête de sortie, des moyens pour déplacer horizontalement le support de tête de sortie le long du châssis et des moyens pour déplacer verticalement la tête d'entrée entre ses différentes positions est divulgué dans US2018/110358.

Toutefois, bien qu'adapté à un usage individuel et privé, ce type de machine de préparation de boissons aromatisées présente de nombreux inconvénients lorsqu'il est destiné à un usage professionnel dans des collectivités ou des bureaux par exemple. En effet, outre leurs capacités limitées en termes de bacs et de fonctionnalités, l'éjection des capsules n'est pas automatique et, lors de l'ouverture du tiroir, les capsules usagées qui sont remplies d'eau se vident sur le plan de travail et sur le sol avant d'être jetées à la poubelle.

De plus, si le dernier utilisateur de la machine oublie de vider le tiroir pour jeter la capsule usagée, celle-ci va rester dans la machine avec le risque de rapidement dégager des mauvaises odeurs (notamment lorsque le liquide sortant de la machine comprend du lait).

### Exposé de l'invention

La présente invention donc pour but de proposer un groupe d'extraction pour machine de préparation d'une boisson aromatisée qui ne comprend pas les inconvénients précités.

Conformément à l'invention, cet but est atteint grâce à un groupe d'extraction à introduction et éjection automatiques pour la préparation d'une boisson aromatisée à partir d'une poudre contenue dans une capsule présentant une paroi latérale de révolution rigide ou semi-rigide fermée à sa base par une paroi de fond qui est munie d'un orifice pour l'écoulement de la boisson aromatisée et à son extrémité opposée par une membrane supérieure flexible destinée à être perforée pour l'injection de liquide sous pression, le groupe d'extraction comprenant :
- un châssis fixe ;
- une goulotte montée verticalement sur le châssis et destinée à recevoir et maintenir au moins une capsule dans une position verticale ;
- une tête d'entrée montée sur le châssis et mobile verticalement par rapport à celui-ci entre une position haute d'ouverture d'une chambre d'extraction et une position basse de fermeture de la chambre d'extraction ;
- un support de tête de sortie monté sur le châssis et mobile horizontalement le long de celui-ci entre une première position de réception/éjection d'une capsule dans laquelle il est positionné sous la goulotte et une seconde position de maintien horizontal de la capsule pour l'extraction dans laquelle il est positionné sous la tête d'entrée ;
- une tête de sortie montée de façon basculante dans le support de tête de sortie autour d'un axe horizontal de basculement entre au moins une position de réception/éjection d'une capsule dans laquelle elle s'étend verticalement sous le châssis et une position de maintien horizontal de la capsule pour l'extraction dans laquelle elle s'étend horizontalement pour maintenir une capsule en vue de son extraction avec la membrane flexible de celle-ci dirigée vers le haut ;
- des moyens pour déplacer horizontalement le support de tête de sortie le long du châssis et faire basculer la tête de sortie autour de l'axe de basculement; et
- des moyens pour déplacer verticalement la tête d'entrée entre ses différentes positions.

Le groupe d'extraction selon l'invention est remarquable en ce qu'il présente notamment une goulotte pouvant contenir une réserve de capsules, et une tête de sortie qui est montée de façon basculante afin d'assurer à la fois une insertion automatique des capsules dans la chambre d'extraction et une éjection automatique des capsules en fin de cycle. De la sorte, l'utilisation dans une machine professionnelle de préparation de boissons aromatisées du groupe d'extraction selon l'invention est rendue possible. En particulier, grâce à l'insertion et l'éjection automatique des capsules, les risques de souiller le plan de travail et/ou de mauvaises odeurs sont écartés.

De façon avantageuse, la tête de sortie comprend un logement cylindrique dimensionné pour recevoir une capsule et muni d'un fond percé et d'un rebord arrondi formant butée sur laquelle est destinée à s'appuyer la paroi latérale d'une capsule provenant de la goulotte.

La tête de sortie peut être montée sur le support de tête de sortie par l'intermédiaire d'au moins un doigt qui est apte à basculer autour de l'axe de basculement à l'intérieur d'une encoche pratiquée sur un côté du support de tête de sortie.

De plus, le groupe d'extraction peut comprendre en outre un moteur solidaire du châssis et couplé à un système à came pour déplacer horizontalement le support de tête de sortie le long du châssis.

Le système à came peut comprendre une bielle couplée, d'une part au moteur, et d'autre part à une rainure transversale pratiquée dans le support de tête de sortie.

De préférence, une plaque est montée verticalement sous le châssis et est destinée à venir en contact avec la tête de sortie lorsque le support de tête de sortie se déplace horizontalement afin de faire basculer la tête de sortie autour de l'axe de basculement.

Dans ce cas, la plaque du châssis peut porter un doigt éjecteur destiné à faciliter l'éjection de la capsule hors de la tête de sortie.

Selon une autre disposition avantageuse, le groupe d'extraction comprend en outre un vérin monté sur le châssis et dont une extrémité porte la tête d'entrée pour la déplacer verticalement entre ses différentes positions.

Selon encore une autre disposition avantageuse, la tête d'entrée est destinée à fermer la chambre d'extraction et comprend au moins une pointe destinée à percer la membrane flexible de la capsule et un joint torique monté à sa périphérie pour assurer une étanchéité de la chambre d'extraction.

Le support de tête de sortie peut comprendre deux rails latéraux destinés à coopérer avec des glissières pratiquées sur chaque côté du châssis afin de permettre à la tête de sortie de se déplacer le long du châssis.

Selon encore une autre disposition avantageuse, la goulotte comprend deux glissières parallèles pour l'insertion et le maintien de plusieurs capsules en position verticale et un sélecteur pour libérer les capsules vers la tête de sortie.

L'invention a également pour objet une utilisation du groupe d'extraction tel que défini précédemment pour la préparation d'une boisson aromatisée à partir d'une poudre contenue dans une capsule présentant une paroi latérale de révolution rigide ou semi-rigide fermée à sa base par une paroi de fond qui est munie d'un orifice pour l'écoulement de la boisson aromatisée et à son extrémité opposée par une membrane supérieure flexible.

### Brève description des dessins

[Fig. 1] La figure 1 est une vue en perspective d'un groupe d'extraction selon l'invention dans une position initiale.
[Fig. 2A-2B] Les figures 2A et 2B sont des vues selon deux perspectives différentes du support de la tête d'entrée du groupe d'extraction de la figure 1.
[Fig. 3A-3B] Les figures 3A et 3B sont des vues selon deux perspectives différentes de l'ensemble supportant la tête de sortie du groupe d'extraction de la figure 1.
[Fig. 4A-4B] La Fig. 4A et la Fig. 4B sont des vues du groupe d'extraction dans une position d'insertion de capsule, respectivement en coupe latérale et en vue selon IVB-IVB de la Fig. 4A.
[Fig. 5A-5B] Les figures 5A et 5B sont des vues du groupe d'extraction dans une position de début de bascule de la tête de sortie, respectivement en coupe latérale et en vue selon VB-VB de la figure 5A.
[Fig. 6A-6B] Les figures 6A et 6B sont des vues du groupe d'extraction dans une position de fin de bascule de la tête de sortie, respectivement en coupe latérale et en vue selon VIB-VIB de la figure 6A.
[Fig. 7A-7B] Les figures 7A et 7B sont des vues du groupe d'extraction dans une position de translation de la capsule, respectivement en coupe latérale et en vue selon VIIB-VIIB de la figure 7A.
[Fig. 8A-8B] Les figures 8A et 8B sont des vues du groupe d'extraction dans une position de fermeture de la chambre d'extraction, respectivement en coupe latérale et en vue selon VIIIB-VIIIB de la figure 8A.
[Fig. 9A-9B] Les figures 9A et 9B sont des vues du groupe d'extraction dans une position d'éjection de la capsule, respectivement en coupe latérale et en vue selon IXB-IXB de la figure 9A.

### Description des modes de réalisation

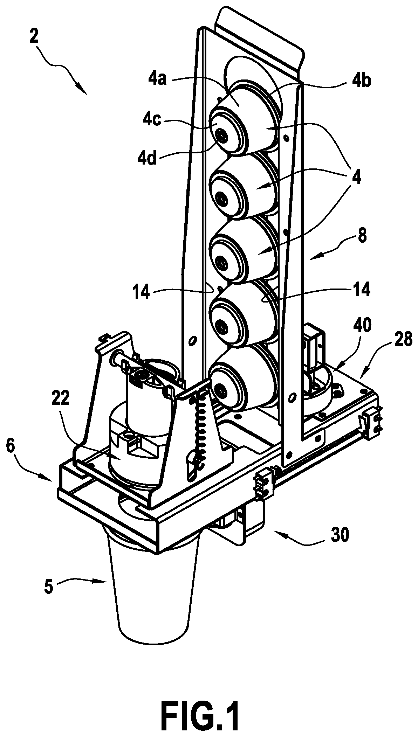

L'invention concerne la préparation d'une boisson aromatisée à partir d'une poudre contenue dans une capsule et au moyen d'un groupe d'extraction 2 tel que celui représenté sur la figure 1.

Ce groupe d'extraction 2 est destiné à équiper une machine de préparation de boissons aromatisées principalement à usage professionnel.

Les capsules 4 compatibles avec ce groupe d'extraction sont du type présentant une paroi latérale de révolution 4a (rigide ou semi-rigide) qui est fermée à sa base par une paroi de fond 4b et à son extrémité opposée par une membrane supérieure flexible 4c.

De façon connue, la membrane flexible 4c est destinée à être perforée par une ou plusieurs pointes de la tête d'entrée du groupe d'extraction pour permettre l'injection de liquide sous pression (typiquement de l'eau). Quant à la paroi de fond 4b, elle est munie d'un orifice 4d pour l'écoulement de la boisson aromatisée dans un gobelet 5 (ou tout autre récipient).

Le groupe d'extraction 2 selon l'invention comprend plusieurs modules assemblés sur un même châssis 6, à savoir notamment une goulotte 8 destinée à recevoir une pluralité de capsules 4, une tête de sortie 30 et une tête d'entrée 22 qui sont destinées à former une chambre d'extraction et d'infusion de la poudre contenue dans les capsules.

La goulotte 8 s'étend verticalement au-dessus du châssis 6 du groupe d'extraction sur lequel elle est montée. Typiquement, elle comprend deux glissières 14 parallèles pour l'insertion et le maintien de plusieurs capsules 4 en position verticale et un sélecteur (non représenté sur les figures) permettant de libérer sur commande les capsules vers la tête de sortie.

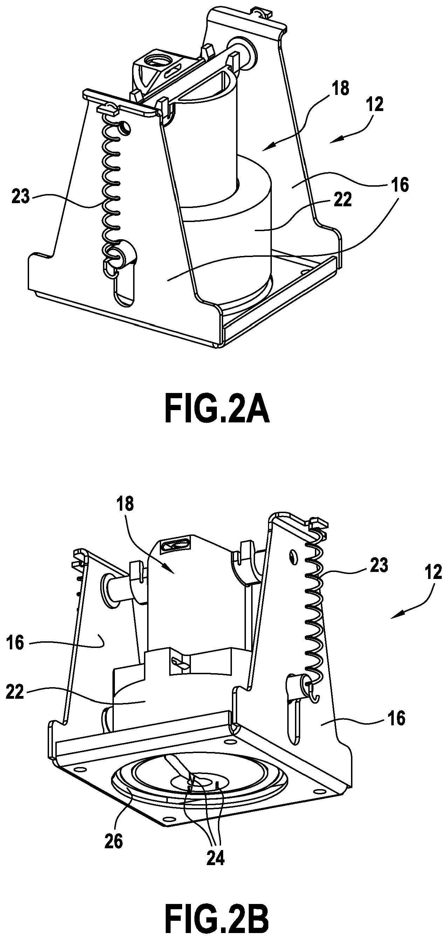

Comme représenté sur la figure 2A et la figure 2B, un support 12 de tête d'entrée comprend un bâti fixe 16 monté sur le châssis du groupe d'extraction et sur lequel est assemblé un vérin 18 vertical. Ce dernier porte à son extrémité la tête d'entrée 22.

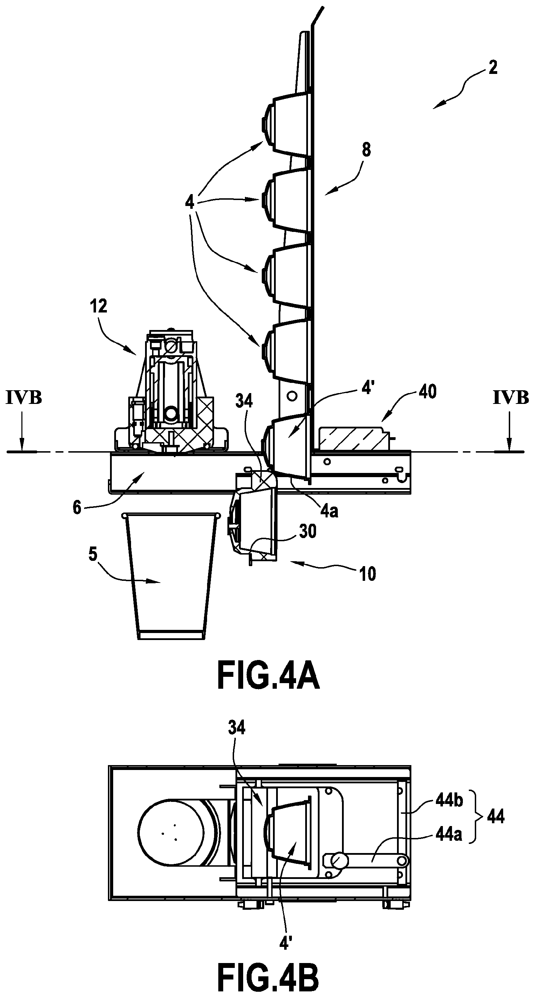

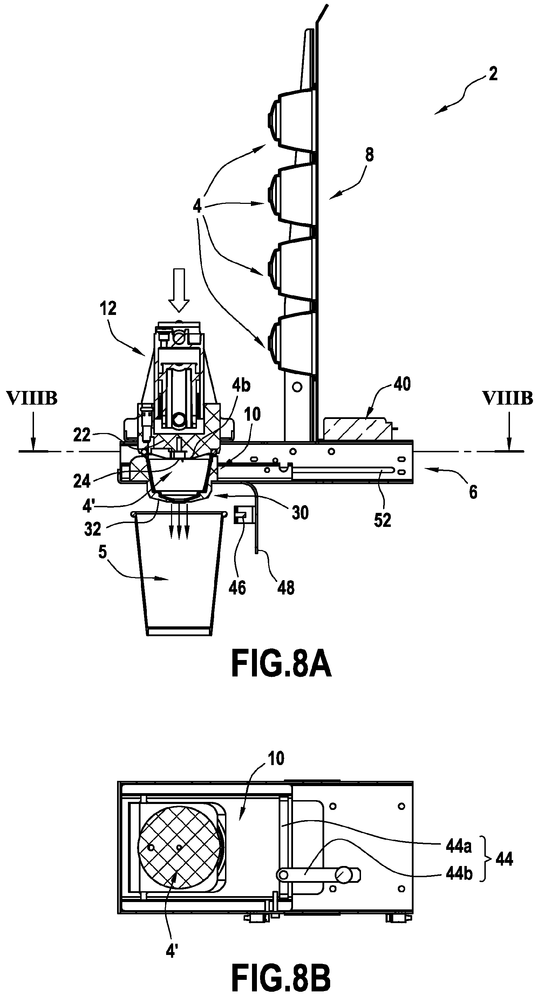

Le vérin 18 permet de déplacer verticalement la tête d'entrée 22 entre une position haute d'ouverture de la chambre d'extraction (figure 4A) et une position basse de fermeture de la chambre d'extraction (figure 8A) dans laquelle elle ferme la chambre d'extraction qu'elle forme avec la tête de sortie 30. Un ressort de rappel 23 permet de maintenir la tête d'entrée dans sa position haute d'ouverture de la chambre d'extraction en l'absence d'actionnement du vérin.

Dans sa position basse, la tête d'entrée 22 est destinée à fermer de façon étanche la chambre d'extraction (lorsque la tête d'entrée est en appui contre la tête de sortie). La tête d'entrée 22 comprend au moins une pointe 24 ou aiguille (et de préférence au nombre de trois comme représenté sur la figure 2B) qui est destinée à percer la membrane flexible 4b de la capsule 4 lorsque celle-ci est dans la chambre d'extraction et porte un joint torique 26 monté à sa périphérie et venant en contact avec la collerette de la capsule pour assurer l'étanchéité de la chambre d'extraction.

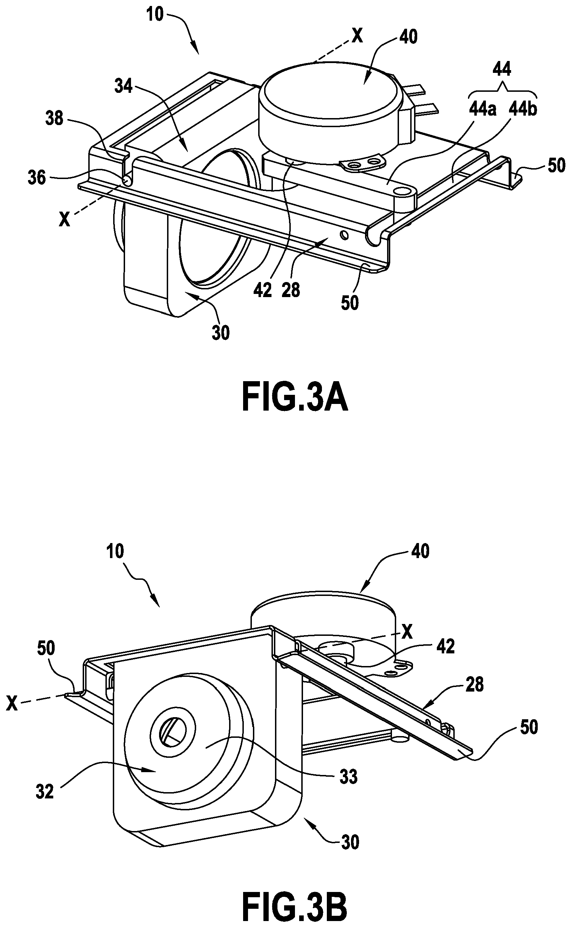

La figure 3A et la figure 3B représentent en perspective l'ensemble 10 supportant la tête de sortie 30 du groupe d'extraction selon l'invention.

La tête de sortie 30 est montée de façon basculante autour d'un axe horizontal de basculement X-X sur un support de tête de sortie 28, ce dernier étant monté coulissant sur le châssis du groupe d'extraction.

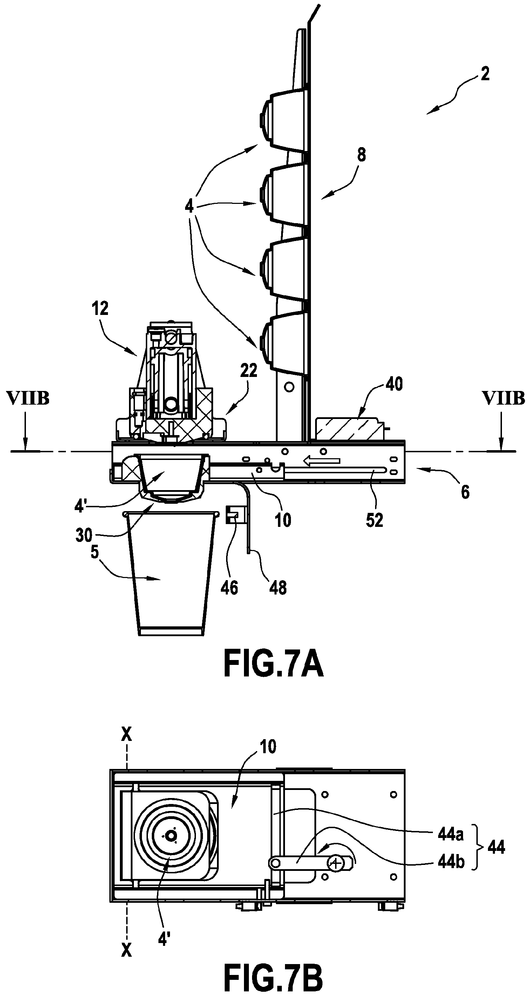

Plus précisément, le support de tête de sortie 28 est mobile horizontalement le long du châssis entre une première position de réception/éjection d'une capsule dans laquelle il est positionné sous la goulotte (voir par exemple les figures 4A-4B) et une seconde position de maintien horizontal de la capsule pour l'extraction dans laquelle il est positionné sous la tête d'entrée (voir par exemple les figures 7A-7B).

La tête de sortie 30 comprend un logement cylindrique 32 qui est dimensionné pour recevoir une capsule et qui est muni d'un fond percé 33. La tête de sortie comprend également un rebord arrondi 34 formant butée sur laquelle est destinée à s'appuyer la paroi latérale d'une capsule provenant de la goulotte.

Plus précisément, la tête de sortie 30 est montée sur le support de tête de sortie 28 par l'intermédiaire d'au moins un doigt 36 qui est apte à basculer autour de l'axe de basculement X-X à l'intérieur d'une encoche 38 pratiquée sur un côté du support de tête de sortie 28.

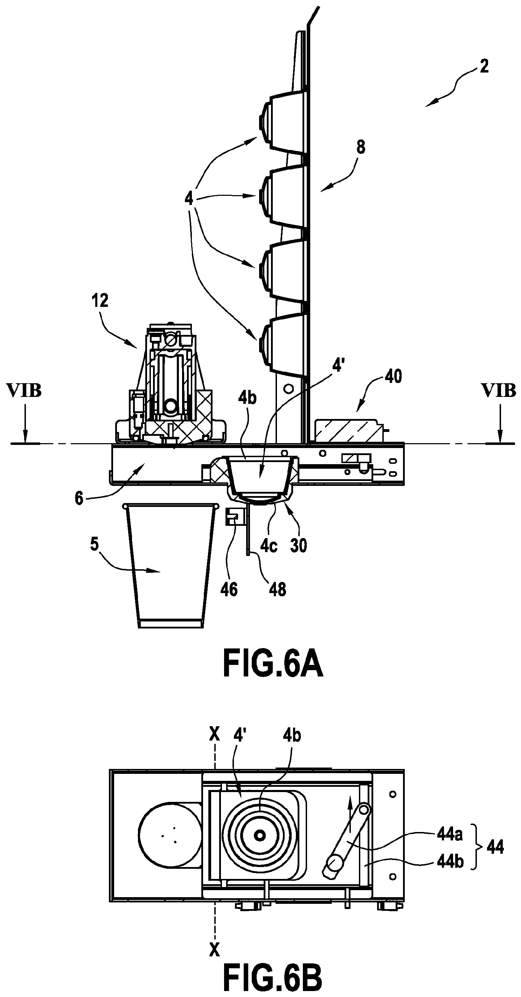

Ainsi, la tête de sortie 30 peut être déplacée par rapport au support de tête de sortie 28 selon plusieurs positions différentes, à savoir : une position de réception/éjection d'une capsule dans laquelle elle s'étend verticalement sous le châssis (voir les figures 3A et 3B) ; une position intermédiaire angulaire à 45° environ pour permettre l'introduction de la capsule dans son logement 32 ; et une position de maintien de la capsule dans laquelle elle s'étend horizontalement sous le châssis pour maintenir une capsule avec la membrane flexible de celle-ci dirigée vers le haut (voir les figures 6A et 6B).

Le support de tête de sortie 28 qui porte la tête de sortie 30 peut se déplacer horizontalement à l'intérieur du châssis et faire basculer la tête de sortie autour de l'axe de basculement X-X.

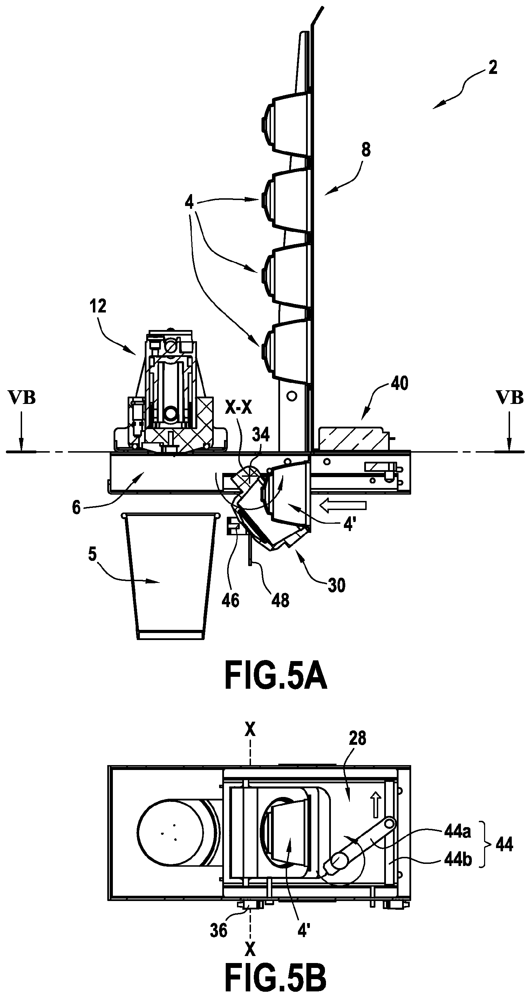

A cet effet, une plaque 48 est montée verticalement sous le châssis 6 (voir les figures 5A-5B et suivantes) et est destinée à venir en contact avec la tête de sortie 30 lorsque le support de tête de sortie 28 se déplace horizontalement afin de faire basculer la tête de sortie autour de l'axe de basculement X-X. Plus précisément, cette plaque 48 présente au niveau de sa fixation sur le châssis un pli arrondi 49 (visible sur la figure 7A) sur lequel le logement 32 de la tête de sortie 30 vient en appui lorsque le support de tête de sortie se déplace horizontalement pour permettre au doigt 36 de pivoter dans l'encoche 38 autour de son axe de basculement X-X.

De plus, le groupe d'extraction comprend un moteur 40 solidaire du châssis et dont l'arbre de sortie 42 est couplé à un système à came 44. Plus précisément, ce système à came 44 se compose d'une bielle 44a couplée, d'une part à l'arbre de sortie 42 du moteur 40, et d'autre part à une rainure transversale 44b pratiquée dans le support de tête de sortie.

Ainsi, lorsque l'arbre de sortie 42 du moteur 40 est mis en rotation, le système à came 44 transforme ce mouvement de rotation en un mouvement de translation du support de tête de sortie. Du fait de la présence du pli arrondi 49 de la plaque 48 sous le châssis, ce mouvement de translation du support de la tête de sortie entraîne : d'abord un basculement de la tête de sortie autour de l'axe de basculement X-X depuis sa position de réception/éjection d'une capsule vers sa position intermédiaire angulaire à 45° d'introduction de la capsule, puis vers sa position de maintien horizontal de la capsule ; puis ensuite un déplacement horizontal du support de tête de sortie depuis sa première position de réception/éjection d'une capsule dans laquelle il est positionné sous la goulotte vers sa seconde position de maintien horizontal de la capsule pour l'extraction dans laquelle il est positionné sous la tête d'entrée. Lorsque le moteur 40 continue d'être activé, le mouvement inverse est opéré (à savoir : déplacement du support de la tête de sortie de sa seconde position vers sa première position, puis basculement de la tête de sortie pour regagner sa position de réception/éjection d'une capsule).

Afin de faciliter le déplacement du support de la tête de sortie le long du châssis, le support de tête de sortie 28 peut comprendre deux rails latéraux 50 (voir les figures 3A-3B) destinés à coopérer avec des glissières 52 pratiquées sur chaque côté du châssis 6 (voir les figures 7A-7B et 8A-8B).

En liaison avec les figures 4A-4B, 5A-5B, 6A-6B, 7A-7B, 8A-8B, et 9A-9B, on décrira maintenant un procédé de fonctionnement du groupe d'extraction 2 tel que décrit précédemment.

La figure 4A et la figure 4B illustrent le groupe d'extraction 2 dans sa position initiale, c'est-à-dire avec la tête de sortie 30 qui est en position verticale, son logement 32 étant vide, et les capsules 4 étant toutes alignées verticalement dans la goulotte 8. Un gobelet 5 (ou tout autre récipient) est placé sous le châssis 6 en regard de la tête d'entrée 12.

La capsule 4' la plus proche de la tête de sortie est libérée de la goulotte 8 par actionnement du sélecteur (non représenté sur les figures). Sous l'effet de la gravité, la capsule 4' tombe vers la tête de sortie avec sa paroi latérale 4a qui vient en butée contre le rebord arrondi 34 de la tête de sortie 30. Dans cette situation, la capsule 4' reste encore guidée verticalement par les glissières de la goulotte.

Comme représenté sur la figure 5A et la figure 5B, l'activation du sélecteur déclenche également la mise en route du moteur 40. Du fait du système à came 44 précédemment décrit, le support de tête de sortie 28 vient pousser la tête de sortie 30. Du fait de la présence de la plaque 48 sous le châssis, la tête de sortie 30 vient en appui contre le pli arrondi 49 de celle-ci et provoque un pivotement du doigt 36 dans l'encoche 38 autour de son axe de basculement X-X, ce qui engendre un début de rotation de la tête de sortie autour de cet axe. La capsule 4' n'est plus retenue en appui sur le rebord arrondi 34 de la tête de sortie et peut alors tomber par gravité en butée à l'intérieur du logement 32. La tête de sortie se trouve ainsi dans sa position intermédiaire angulaire (à 45° environ) d'introduction de la capsule.

La figure 6A et la figure 6B illustrent la position de fin de bascule de la tête de sortie 30 qui se trouve dans sa position de maintien de la capsule dans laquelle elle s'étend horizontalement.

Le moteur 40 continue d'entrainer en rotation la tête de sortie qui vient se positionner à l'horizontal. La capsule 4' est ainsi entièrement logée à l'intérieur du logement 32 de la tête de sortie avec sa membrane flexible 4b tournée vers le haut et sa paroi de fond 4c tournée vers le bas.

Comme représenté sur la figure 7A et sur la figure 7B, le moteur 40 continue d'agir sur le support de tête de sortie qui se déplace alors longitudinalement depuis sa première position de réception/éjection d'une capsule dans laquelle il est positionné sous la goulotte vers sa seconde position de maintien horizontal de la capsule pour l'extraction dans laquelle il est positionné verticalement sous la tête d'entrée 22 (par glissement des rails latéraux 50 dans les glissières 52 du châssis 6).

Le moteur 40 cesse de fonctionner. A la place, le vérin 18 de la tête d'entrée 22 est activé, ce qui entraîne une descente de celle-ci vers la tête de sortie 30 (voir les figures 8A et 8B).

Une fois la tête d'entrée dans sa position basse, elle constitue avec le logement 32 de la tête de sortie une chambre étanche pour l'extraction et d'infusion de la poudre contenue dans la capsule 4'. Au cours de la descente, les pointes 24 (ou les aiguilles) de la tête d'entrée 22 viennent percer la membrane flexible 4b de la capsule 4' puis injecter du liquide sous pression (typiquement de l'eau) à l'intérieur de la capsule.

La boisson aromatisée sort alors directement de la capsule au travers de l'orifice 4d de la paroi de fond de celle-ci, puis du fond percé 33 du logement 32 de la tête de sortie pour finir dans le gobelet 5. On notera que l'écoulement de la boisson aromatisée s'effectue sans aucun contact direct avec une partie interne ou externe du groupe d'extraction.

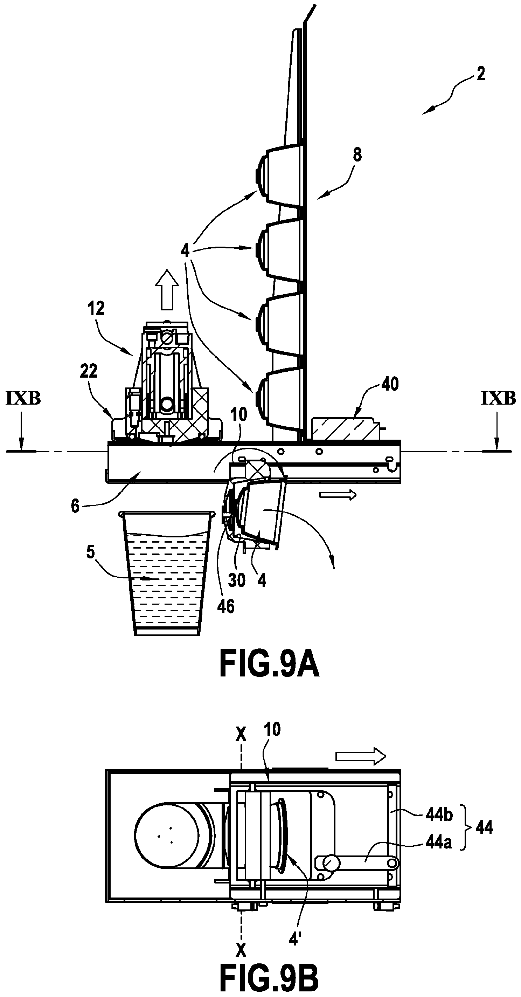

La figure 9A et la figure 9B illustrent la position d'éjection de la capsule 4' après l'étape d'extraction et d'infusion.

Pour y parvenir, la tête d'entrée 22 remonte pour libérer la capsule 4' et le moteur 40 est à nouveau actionné en sens inverse afin de faire reculer le support de tête de sortie depuis sa seconde position vers sa première position. Après avoir reculé le long du châssis, la tête de sortie vient basculer autour de l'axe de basculement X-X pour revenir dans sa position de réception/éjection d'une capsule. Ce basculement permet de faire tomber par gravité la capsule 4' hors du logement 32.

Afin de faciliter l'éjection de la capsule et d'éviter les éventuels problèmes de collage de celle-ci dans la tête de sortie, un doigt éjecteur 46 fixe est monté sur la plaque 48 solidaire du châssis et est positionné de façon à pénétrer à l'intérieur du logement 32 en traversant le fond percé 33 de celui-ci lorsque la tête de sortie vient basculer en fin de cycle. Ainsi, au cours du mouvement de bascule de la tête de sortie, le doigt éjecteur 46 pénètre dans le logement et pousse sur la paroi de fond de la capsule pour l'aider à sortir.

## Revendications

1. Groupe d'extraction (2) à introduction et éjection automatiques pour la préparation d'une boisson aromatisée à partir d'une poudre contenue dans une capsule (4) présentant une paroi latérale de révolution (4a) rigide ou semi-rigide fermée à sa base par une paroi de fond (4c) qui est munie d'un orifice (4d) pour l'écoulement de la boisson aromatisée et à son extrémité opposée par une membrane supérieure (4b) flexible destinée à être perforée pour l'injection de liquide sous pression, le groupe d'extraction comprenant :
- un châssis (6) fixe ;
- une goulotte (8) montée verticalement sur le châssis et destinée à recevoir et maintenir au moins une capsule dans une position verticale ;
- une tête d'entrée (22) montée sur le châssis et mobile verticalement par rapport à celui-ci entre une position haute d'ouverture d'une chambre d'extraction et une position basse de fermeture de la chambre d'extraction ;
- un support de tête de sortie (28) monté sur le châssis et mobile horizontalement le long de celui-ci entre une première position de réception/éjection d'une capsule dans laquelle il est positionné sous la goulotte et une seconde position de maintien horizontal de la capsule pour l'extraction dans laquelle il est positionné sous la tête d'entrée ;
- une tête de sortie (30) montée de façon basculante dans le support de tête de sortie (28) autour d'un axe horizontal de basculement (X-X) entre au moins une position de réception/éjection d'une capsule dans laquelle elle s'étend verticalement sous le châssis et une position de maintien horizontal de la capsule pour l'extraction dans laquelle elle s'étend horizontalement pour maintenir une capsule en vue de son extraction avec la membrane flexible de celle-ci dirigée vers le haut ;
- des moyens (40, 44) pour déplacer horizontalement le support de tête de sortie le long du châssis et faire basculer la tête de sortie autour de l'axe de basculement (X-X) ; et
- des moyens (18) pour déplacer verticalement la tête d'entrée entre ses différentes positions.

2. Groupe d'extraction selon la revendication 1, dans lequel la tête de sortie (30) comprend un logement (32) cylindrique dimensionné pour recevoir une capsule et muni d'un fond percé (33) et d'un rebord arrondi (34) formant butée sur laquelle est destinée à s'appuyer la paroi latérale (4a) d'une capsule (4') provenant de la goulotte (8).

3. Groupe d'extraction selon l'une des revendications 1 et 2, dans lequel la tête de sortie (30) est montée sur le support de tête de sortie (28) par l'intermédiaire d'au moins un doigt (36) qui est apte à basculer autour de l'axe de basculement (X-X) à l'intérieur d'une encoche (38) pratiquée sur un côté du support de tête de sortie.

4. Groupe d'extraction selon l'une quelconque des revendications 1 à 3, comprenant en outre un moteur (40) solidaire du châssis (6) et couplé à un système à came (44) pour déplacer horizontalement le support de tête de sortie le long du châssis.

5. Groupe d'extraction selon la revendication 4, dans lequel le système à came (44) comprend une bielle (44a) couplée, d'une part au moteur (40), et d'autre part à une rainure (44b) transversale pratiquée dans le support de tête de sortie.

6. Groupe d'extraction selon l'une des revendications 4 et 5, dans lequel une plaque (48) est montée verticalement sous le châssis et est destinée à venir en contact avec la tête de sortie (30) lorsque le support de tête de sortie (28) se déplace horizontalement afin de faire basculer la tête de sortie autour de l'axe de basculement (X-X).

7. Groupe d'extraction selon la revendication 6, dans lequel la plaque (48) du châssis porte un doigt éjecteur (46) destiné à faciliter l'éjection de la capsule (4') hors de la tête de sortie.

8. Groupe d'extraction selon l'une quelconque des revendications 1 à 7, comprenant en outre un vérin (18) monté sur le châssis et dont l'extrémité porte la tête d'entrée (22) pour la déplacer verticalement entre ses différentes positions.

9. Groupe d'extraction selon l'une quelconque des revendications 1 à 8, dans lequel la tête d'entrée (22) est destinée à fermer la chambre d'extraction et comprend au moins une pointe (24) destinée à percer la membrane flexible (4b) de la capsule et un joint torique (26) monté à sa périphérie pour assurer une étanchéité de la chambre d'extraction.

10. Groupe d'extraction selon l'une quelconque des revendications 1 à 9, dans lequel le support de tête de sortie (28) comprend deux rails latéraux (50) destinés à coopérer avec des glissières (52) pratiquées sur chaque côté du châssis afin de permettre à la tête de sortie de se déplacer le long du châssis.

11. Groupe d'extraction selon l'une quelconque des revendications 1 à 10, dans lequel la goulotte (8) comprend deux glissières (14) parallèles pour l'insertion et le maintien de plusieurs capsules (4) en position verticale et un sélecteur pour libérer les capsules vers la tête de sortie.

12. Utilisation du groupe d'extraction selon l'une quelconque des revendications 1 à 11 pour la préparation d'une boisson aromatisée à partir d'une poudre contenue dans une capsule (4) présentant une paroi latérale de révolution (4a) rigide ou semi-rigide fermée à sa base par une paroi de fond (4c) qui est munie d'un orifice (4d) pour l'écoulement de la boisson aromatisée et à son extrémité opposée par une membrane supérieure (4b) flexible.

## Patentansprüche

1. Extraktionseinheit (2) mit automatischer Zuführung und automatischem Auswurf zur Zubereitung eines aromatisierten Getränks aus einem Pulver, das in einer Kapsel (4) enthalten ist, welche eine starre oder halbstarre rotationssymmetrische Seitenwand (4a) aufweist, die an ihrer Basis durch eine Bodenwand (4c), welche mit einer Öffnung (4d) für das Abfließen des aromatisierten Getränks versehen ist, und an ihrem entgegengesetzten Ende durch eine flexible obere Membran (4b) verschlossen ist, die dazu bestimmt ist, für das Einspritzen von unter Druck stehender Flüssigkeit durchstochen zu werden, wobei die Extraktionseinheit umfasst:
- ein feststehendes Gestell (6);
- eine Rutsche (8), die vertikal an dem Gestell angebracht und dazu bestimmt ist, mindestens eine Kapsel aufzunehmen und in einer vertikalen Position zu halten;
- einen Einlasskopf (22), der an dem Gestell angebracht und in Bezug auf dieses zwischen einer oberen Position zum Öffnen einer Extraktionskammer und einer unteren Position zum Schließen der Extraktionskammer vertikal beweglich ist;
- einen Auslasskopfträger (28), der an dem Gestell angebracht und entlang desselben zwischen einer ersten Aufnahme-/Auswurfposition einer Kapsel, in welcher er unter der Rutsche positioniert ist, und einer zweiten horizontalen Halteposition der Kapsel für die Extraktion, in welcher er unter dem Einlasskopf positioniert ist, horizontal beweglich ist;
- einen Auslasskopf (30), der im Auslasskopfträger (28) um eine horizontale Schwenkachse (X-X) zwischen mindestens einer Aufnahme-/Auswurfposition einer Kapsel, in welcher er sich vertikal unter dem Gestell erstreckt, und einer horizontalen Halteposition der Kapsel für die Extraktion, in welcher er sich horizontal erstreckt, um eine Kapsel im Hinblick auf deren Extraktion mit der flexiblen Membran nach oben gerichtet zu halten, schwenkbar angebracht ist;
- Mittel (40, 44), um den Auslasskopfträger horizontal entlang des Gestells zu bewegen und den Auslasskopf um die Schwenkachse (X-X) zu verschwenken; und
- Mittel (18), um den Einlasskopf vertikal zwischen seinen verschiedenen Positionen zu bewegen.

2. Extraktionseinheit nach Anspruch 1, wobei der Auslasskopf (30) eine zylindrische Aufnahme (32) umfasst, die zur Aufnahme einer Kapsel dimensioniert ist, und mit einem durchbrochenen Boden (33) und einem abgerundeten Rand (34) versehen ist, der einen Anschlag bildet, an dem die Seitenwand (4a) einer aus der Rutsche (8) kommenden Kapsel (4') bestimmt ist, sich abzustützen.

3. Extraktionseinheit nach einem der Ansprüche 1 und 2, wobei der Auslasskopf (30) an dem Auslasskopfträger (28) mittels mindestens eines Fingers (36) angebracht ist, der geeignet ist, um die Schwenkachse (X-X) im Inneren einer Kerbe (38) zu schwenken, die in einer Seite des Auslasskopfträgers ausgebildet ist.

4. Extraktionseinheit nach einem der Ansprüche 1 bis 3, ferner umfassend einen Motor (40), der fest mit dem Gestell (6) verbunden und an ein Nockensystem (44) gekoppelt ist, um den Auslasskopfträger entlang des Gestells horizontal zu bewegen.

5. Extraktionseinheit nach Anspruch 4, wobei das Nockensystem (44) eine Pleuelstange (44a) umfasst, die einerseits an den Motor (40) und andererseits an eine Quernut (44b) gekoppelt ist, die in dem Auslasskopfträger ausgebildet ist.

6. Extraktionseinheit nach einem der Ansprüche 4 und 5, wobei eine Platte (48) vertikal unter dem Gestell angebracht ist und dazu bestimmt ist, mit dem Auslasskopf (30) in Kontakt zu kommen, wenn sich der Auslasskopfträger (28) horizontal bewegt, um den Auslasskopf um die Schwenkachse (X-X) zu verschwenken.

7. Extraktionseinheit nach Anspruch 6, wobei die Platte (48) des Gestells einen Auswurffinger (46) trägt, der dazu bestimmt ist, den Auswurf der Kapsel (4') aus dem Auslasskopf zu erleichtern.

8. Extraktionseinheit nach einem der Ansprüche 1 bis 7, ferner umfassend einen Zylinder (18), der an dem Gestell angebracht ist und dessen Ende den Einlasskopf (22) trägt, um ihn vertikal zwischen seinen verschiedenen Positionen zu bewegen.

9. Extraktionseinheit nach einem der Ansprüche 1 bis 8, wobei der Einlasskopf (22) dazu bestimmt ist, die Extraktionskammer zu schließen und mindestens eine Spitze (24), die dazu bestimmt ist, die flexible Membran (4b) der Kapsel zu durchstechen, sowie einen O-Ring (26) umfasst, der an seinem Umfang montiert ist, um eine Abdichtung der Extraktionskammer zu gewährleisten.

10. Extraktionseinheit nach einem der Ansprüche 1 bis 9, wobei der Auslasskopfträger (28) zwei seitliche Schienen (50) umfasst, die dazu bestimmt sind, mit Führungen (52) zusammenzuwirken, die auf jeder Seite des Gestells ausgebildet sind, um es dem Auslasskopf zu ermöglichen, sich entlang des Gestells zu bewegen.

11. Extraktionseinheit nach einem der Ansprüche 1 bis 10, wobei die Rutsche (8) zwei parallele Führungen (14) zum Einführen und Halten mehrerer Kapseln (4) in vertikaler Position sowie einen Wähler umfasst, um die Kapseln zum Auslasskopf hin freizugeben.

12. Verwendung der Extraktionseinheit nach einem der Ansprüche 1 bis 11 zur Zubereitung eines aromatisierten Getränks aus einem Pulver, das in einer Kapsel (4) enthalten ist, welche eine starre oder halbstarre rotationssymmetrische Seitenwand (4a) aufweist, die an ihrer Basis durch eine Bodenwand (4c) verschlossen ist, welche mit einer Öffnung (4d) für das Abfließen des aromatisierten Getränks versehen ist, und an ihrem entgegengesetzten Ende durch eine flexible obere Membran (4b) verschlossen ist.

## Claims

1. An extraction unit (2) having automatic introduction and ejection, for preparing a flavoured beverage from a powder contained in a capsule (4) having a rigid or semi-rigid, axisymmetric side wall (4a) closed at its base by a bottom wall (4c) which is provided with an opening (4d) for the outflow of the flavoured beverage and closed at its opposite end by a flexible top membrane (4b) intended to be perforated for the injection of pressurised liquid, the extraction unit comprising:
- a fixed frame (6);
- a chute (8) vertically mounted on the frame and intended to receive and hold at least one capsule in a vertical position;
- an inlet head (22) mounted on the frame and vertically movable relative thereto between a top open position of an extraction chamber and a bottom closed position of the extraction chamber;
- an outlet head support (28) mounted on the frame and horizontally movable along same between a first position for receiving/ejecting a capsule, in which it is positioned under the chute, and a second position for holding the capsule horizontal for the extraction, in which it is positioned under the inlet head;
- an outlet head (30) mounted in the outlet head support (28) so as to tilt about a horizontal tilt axis (X-X) between at least one position for receiving/ejecting a capsule, in which it extends vertically under the frame, and a horizontal holding position of the capsule for the extraction, in which it extends horizontally in order to hold a capsule with a view to its extraction with the flexible membrane thereof directed upwards;
- means (40, 44) for moving the outlet head support horizontally along the frame, and tilting the outlet head around the tilt axis (X-X); and
- means (18) for moving the inlet head vertically between its various positions.

2. The extraction unit according to claim 1, wherein the outlet head (30) comprises a cylindrical housing (32) dimensioned to receive a capsule and provided with a pierced bottom (33) and a rounded rim (34) forming a stop on which the side wall (4a) of a capsule (4) coming from the chute (8) is intended to rest.

3. The extraction unit according to one of claims 1 and 2, in which the outlet head (30) is mounted on the outlet head support (28) by means of at least one finger (36) which is able to tilt about the tilting axis (X-X) inside a notch (38) provided on one side of the outlet head support.

4. The extraction unit according to any one of claims 1 to 3, further comprising a motor (40) rigidly connected to the frame (6) and coupled to a cam system (44) for moving the outlet head support horizontally along the frame.

5. The extraction unit according to claim 4, wherein the cam system (44) comprises a connecting rod (44a) coupled, on the one hand, to the motor (40) and, on the other hand, to a transverse groove (44b) provided in the outlet head support.

6. The extraction unit according to one of claims 4 and 5, wherein a plate (48) is mounted vertically under the frame and is intended to come into contact with the outlet head (30) when the outlet head support (28) moves horizontally, in order to tilt the outlet head about the tilting axis (X-X).

7. The extraction unit according to claim 6, wherein the frame plate (48) bears an ejector finger (46) to facilitate ejection of the capsule (4') from the outlet head.

8. The extraction unit according to any one of claims 1 to 7, further comprising an actuator (18) mounted on the frame, the end of which bears the inlet head (22) in order to move it vertically between its various positions.

9. The extraction unit according to any one of claims 1 to 8, wherein the inlet head (22) is intended to close the extraction chamber and comprises at least one spike (24) intended to pierce the flexible membrane (4b) of the capsule, and an O-ring (26) mounted at its periphery to seal the extraction chamber.

10. The extraction unit according to any one of claims 1 to 9, wherein the outlet head support (28) comprises two lateral rails (50) intended to cooperate with slides (52) provided on each side of the frame in order to enable the outlet head to move along the frame.

11. The extraction unit according to any one of claims 1 to 10, wherein the chute (8) comprises two parallel slides (14) for inserting and holding a plurality of capsules (4) in a vertical position, and a selector for releasing the capsules towards the outlet head.

12. Use of the extraction unit according to any one of claims 1 to 11 for the preparation of a flavoured beverage from a powder contained in a capsule (4) having a rigid or semi-rigid axisymmetric side wall (4a) closed at its base by a bottom wall (4c) which is provided with an opening (4d) for the outflow of the flavoured beverage and closed at its opposite end by a flexible top membrane (4b).
